# EUROPEAN PATENT APPLICATION

(11) **EP 1 802 087 A2**
(43) Date of publication of application: **27.06.2007**
(21) Application number: 06017680.7
(22) Date of filing: 24.08.2006
(51) Int. Cl.: H04M 1/60

(54) **Portable terminal and method for outputting voice data thereof**

(30) Priority: 26.12.2005 KR 20050130019
(71) Applicant: Samsung Electronics Co., Ltd., Suwon-si, Gyeonggi-Do (KR)
(72) Inventor: Yoon, Gun-Hyuk, Yeongtong-gu Suwon-si Gyeonggi-do (KR)
(74) Representative: Lang, Johannes

(57) **Abstract**

Provided is a method for outputting voice data in a portable terminal includes the steps of setting voice frequency bands of one language selected from a plurality of languages; modulating frequency bands of received voice data to the voice frequency bands of the set language; and outputting the voice data whose frequency bands are modulated to the voice frequency bands of the set language. Exemplary embodiments of the present invention allow for satisfactory conversation quality to be achieved on a portable terminal, regardless of the language of a talking partner, by setting an audio filter suitable for a language used by a user of the portable terminal.

## Description

### BACKGROUND OF THE INVENTION

### Field of the Invention:

The present invention relates to a portable terminal and a method for outputting voice data thereof. More particularly, the present invention relates to a portable terminal and a method for outputting voice data that is tailored to a language spoken by a user of the portable terminal.

### Description of the Related Art:

Portable terminals are now ubiquitous throughout the world and are generally carried by users at all times. Therefore, the same type of portable terminal may be used in various countries where different languages are used.

On the other hand, a number of languages are used in different countries and by users of portable terminals, and the respective languages have different voice frequency bands.

Table 1 represents the voice frequency bands of various languages.

**Table 1**

| Language | Voice frequency bands (Hz) |
|---|---|
| English | 800~12000 |
| Russian | 125~8000 |
| Italian | 2000∼3900 |
| German | 125~3000 |
| Spanish | 125~500, 1500~2500 |
| French | 125~300, 1000~2000 |
| Japanese | 125~1500 |
| Korean | 125~1500 |

Referring to Table 1, it is understood that the languages used in different countries by users of portable terminals have voice frequency bands of their own.

For example, since English is a language having a lot of consonants, its frequency band is 1500 to 12000 Hz and thus is a language using high frequency bands. On the contrary, since Korean is a language consisting mainly of vowels, it is a language using the low frequency bands of 125 to 1500 Hz. In addition, French uses the sound frequency bands of 125 to 300 Hz and 1000 to 2000 Hz.

However, despite the variety of languages used in different regions of the world, conventional portable terminals include only one audio filter for determining conversation quality of transmitted and received voice data.

For example, for portable terminals produced in Korea, the portable terminal's audio filter has coefficient values fixed in advance so as to satisfy the voice frequency range of Korean. As a result, users of languages whose voice frequency bands differ from those of Korean do not experience satisfactory results.

The above problem is especially pronounced in the case in which a user speaking Korean talks with a user speaking English using a portable terminal. In this case, since the voice frequency bands of Korean are 125 to 1500 Hz which are the low frequency bands and the voice frequency bands of English are 800 to 12000 Hz which are the high frequency bands, the user speaking Korean is unable to listen to the high frequency English pronunciations of the user speaking English and it is difficult for the user speaking Korean to recognize the English pronunciations.

Accordingly, there is a need for an improved portable terminal and a method for outputting voice data that is tailored to a language spoken by a user of the portable terminal.

### SUMMARY OF THE INVENTION

Exemplary embodiments of the present invention address at least the above problems and/or disadvantages and provide at least the advantages described below. Accordingly, an aspect of the present invention is to provide a portable terminal and a method for outputting received voice data so as to have a conversation quality suitable for a language used by a user of the portable terminal.

In order to accomplish the object, there is provided a method for outputting voice data in a portable terminal, the method including the steps of setting voice frequency bands of one language selected from a plurality of languages; modulating frequency bands of received voice data to the voice frequency bands of the set language; and outputting the voice data whose frequency bands are modulated to the voice frequency bands of the set language.

The portable terminal according to an exemplary embodiment of the present invention includes a memory for storing audio filter coefficient values for modulating frequency bands of voice data according to a plurality of languages; a control unit for setting voice frequency bands of one language selected from the plurality of languages and for modulating frequency bands of received voice data to the voice frequency bands of the set language; and an audio processing unit for outputting the voice data whose frequency bands are modulated to the voice frequency bands of the set language.

Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features, and advantages of certain embodiments of the present invention will be more apparent from the following description taken in conjunction with the accompanying drawings, in which:
FIG. 1 is a block diagram showing the constitution of a portable terminal according to an exemplary embodiment of the present invention;
FIG. 2 is a flow chart representing the operation of the portable terminal according to an exemplary embodiment of the present invention; and
FIGs. 3A and 3B are exemplary views for explaining the operation of the portable terminal according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

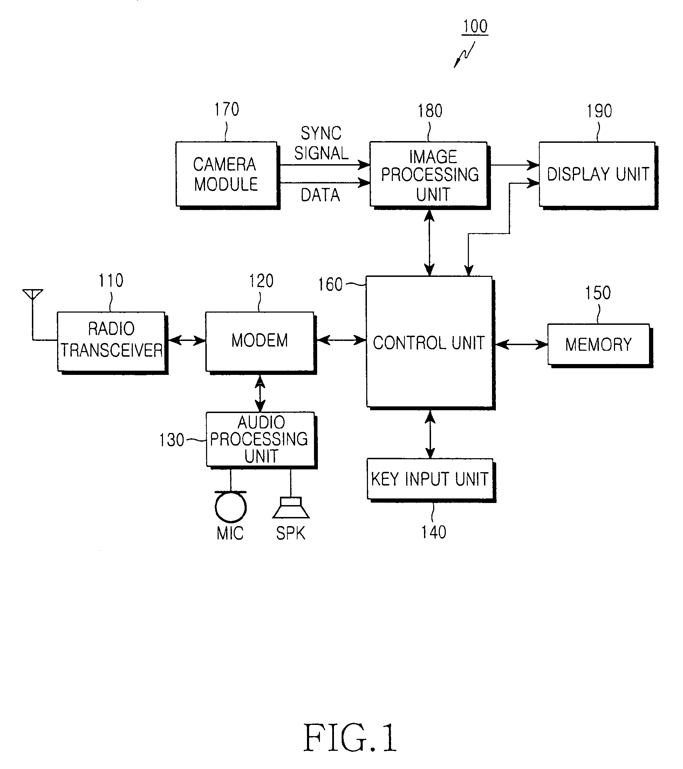

FIG. 1 is a block diagram showing the constitution of a portable terminal according to an exemplary embodiment of the present invention.

The portable terminal 100 includes a radio transceiver 110, a modem 120, an audio processing unit 130, a key input unit 140, a memory 150, a control unit 160, a camera module 170, an image processing unit 180, and a display unit 190.

The radio transceiver 110 transmits and receives voice data, character data, image data, and control data under the control of the control unit 160, and includes an RF transmitter for modulating and amplifying a signal for transmission and an RF receiver for demodulating and low-noise amplifying a received signal.

The modem 120 is used for transforming digital signals from a control unit 160 into corresponding analog signals delivered to the radio transceiver 110, or analog signals from the RF unit into the corresponding digital signals delivered to the audio processor 110 or the control unit160.

The audio processing unit 130 modulates the electrical signals input from a microphone and converts them into voice data, and demodulates the encoded voice data input from the radio transceiver 110 via the modem 120 and outputs them to a speaker. It is preferable that the audio processing unit 130 includes a codec in order to convert the digital audio signals received from the radio transceiver 110 via the modem 120 into analog signals and then reproduce them, and to convert the analog audio signals generated in the microphone to digital audio signals.

The codec includes a data codec for processing packet data and an audio codec for processing voice signals. Further, the codec can be included in the control unit 160. In addition, the audio processing unit 130 can include an audio filter for modulating the frequency bands of the voice data received from the radio transceiver 110. In an exemplary embodiment of the present invention, the audio filter refers to an FIR (Finite Impulse Response) digital filter. The frequency bands of the voice data received from the radio transceiver 110 are modulated according to coefficient values of the FIR filter, in order to be output. The FIR filter is well known in the art, and therefore a detailed description thereof will be omitted. Also, the audio filter can be included in the control unit 160.

The key input unit 140 has a key matrix structure (not shown). The key input unit 140 includes character keys, number keys, function keys, and exterior volume keys, and outputs key input signals corresponding to the keys input by a user of the control unit 160.

The memory 150 can include a program memory and a data memory. The memory 150 stores information used to control the operation of the portable terminal 100 , information selected on the basis of user selection information, and user storing information.

Further, the memory 150 stores coefficient values of the audio filter for modulating the frequency bands of the voice data, according to a language.

The control unit 160 controls the overall operation of the portable terminal 100 according to an exemplary embodiment of the present invention. The control unit 160 sets the voice frequency bands of a language selected by a user from among various languages. If voice data is received by the radio transceiver 110, the control unit 160 controls the portable terminal to modulate the frequency bands of the received voice data to the set voice frequency bands and then outputs it.

If there is a language setup request from a user, the control unit 160 displays a list including various names of languages on the display unit 190. Exemplary languages include English, Japanese, Korean, and Spanish. Further, if a language in the list is selected on the basis of the user selection information, the control unit sets the voice frequency bands of the selected language.

In other words, if a language is selected by a user, the control unit 160 sets the voice frequency bands by reading the coefficient values of the audio filter, which corresponds to the frequency bands of the selected language from the memory 150, and then applies them to the audio filter. The frequency bands of the voice data passing through the audio filter are modulated using the coefficient values of the audio filter and are output.

In addition, the portable terminal 100 may include a camera module 170.

The camera module 170 may include a lens section (not shown) which can be withdrawn or inserted, and photographs image data. Further, the camera module 170 includes a camera sensor (not shown) for converting photographed optical signals into electrical signals and a signal processing section (not shown) for converting analog image signals photographed by the camera sensor to digital data.

An exemplary camera sensor is a CCD (Charge Coupled Device) sensor and an exemplary signal processing section is a DSP (Digital Signal Processor). The camera sensor and the signal processing section can be embodied either integrally or separately.

The image processing unit 180 generates screen data for displaying image signals output from the camera module 170.

The image processing unit 180 processes the image signals output from the camera module 170 in frames, and outputs the frame image data according to the characteristics and size of the display unit 190. The image processing unit 180 includes an image codec, and compresses the frame image data displayed on the display unit 190 in a preset manner or restores the compressed frame image data to the original frame image data.

Further, the image processing unit 180 may include an OSD (On Screen Display) function, and can output OSD data according to the size of the screen displayed, under the control of the control unit 160.

The display unit 190 includes an LCD (Liquid Crystal Display), and outputs various display data generated in the portable terminal 100. If the LCD includes touch screen capabilities, the display unit 190 can be operated as an input section.

The display unit 190 displays the image signals output from the image processing unit 180 on a screen, and displays user data output from the control unit 160.

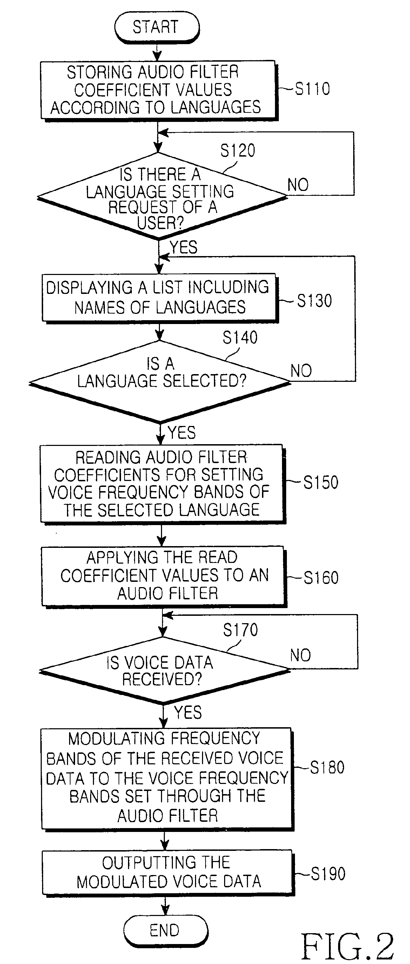

FIG. 2 is a flow chart for representing the operation of the portable terminal according to an exemplary embodiment of the present invention.

Referring to FIGs. 1 and 2, the control unit 160 stores, in step S 110, audio filter coefficient values for modulating frequency bands of voice data, according to languages. The languages include various languages used by users having various nationalities, such as English, Russian, Italian, German, French, and Korean. Each of the languages has voice frequency bands that differ according to their frequency characteristics.

The control unit 160 checks whether there is a language setup request from a user, in stepS120. The language setup request refers to a request for setting the types of the characters displayed on the display unit 190.

For example, the language setup request includes a request for setting the type of the characters displayed on the display unit 190 to English by a user understanding English, or a request for setting the type of characters displayed on the display unit 190 to French by a user understanding French.

If there is a language setup request, the control unit 160 produces a list of available languages and displays it on the display unit 190, in stepS 130.

The control unit 160 checks whether a language is selected on the basis of selection information in the list, in stepS140. A user can select a language among various languages through key input.

If a user selects a language, the control unit 160 reads the coefficient values of the audio filter for setting the voice frequency bands of the selected language among the audio filter coefficient values stored in the memory 150 according to the types of the languages, in stepS150. In other words, the control unit 160 reads the audio filter coefficient values that correspond to the frequency bands of the selected language from the memory 150.

The control unit 160 applies the read audio filter coefficient values to the audio filter, in step S160.

The control unit 160 checks whether the radio transceiver 110 receives voice data, in step S 170.

If the radio transceiver 110 receives voice data, the control unit 160 modulates the frequency bands of the received voice data into the voice frequency bands set by using the audio filter, in step S 180.

The control unit 160 outputs the voice data, whose frequency bands are modulated, through the audio processing unit 130, in step S 190.

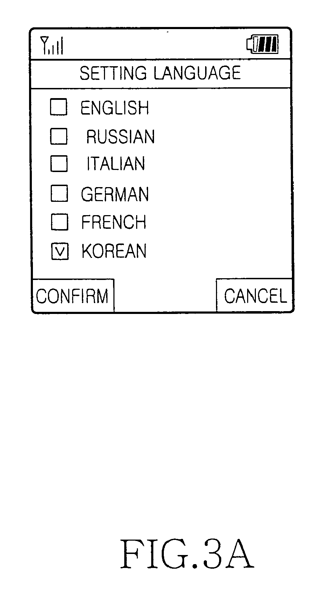

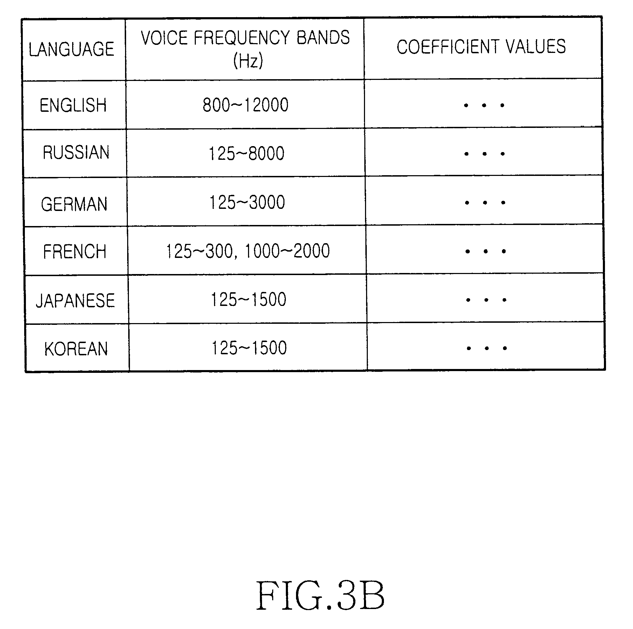

FIGs. 3A and 3B are exemplary views for explaining the operation of the portable terminal according to an exemplary embodiment of the present invention.

Referring to FIGs. 3A and 3B, FIG. 3A shows a screen enabling a user to select a language, which is to be set, using a list including available languages in response to a language setup request from the user.

FIG. 3B is a table representing an example in which audio filter coefficient values for modulating frequency bands of voice data are stored according to languages.

In FIG. 3A, if a user selects 'Korean' as a language to be set and then inputs a confirm key, the portable terminal 100 sets voice frequency bands for 'Korean'.

In order to modulate the frequency bands of all of the received voice data to the voice frequency bands for 'Korean' and output the modulated frequency bands, the audio filter coefficient values for setting the voice frequency bands for 'Korean' is read in FIG. 3B and applied to the audio filter. Then, since the portable terminal modulates the frequency bands of all of the received voice data to the voice frequency bands of 'Korean' through the audio filter and outputs the modulated frequency bands, it can provide satisfactory conversation quality to a user understanding Korean.

As mentioned above, exemplary embodiments of the present invention allow for satisfactory conversation quality to be achieved on a portable terminal, regardless of the language of a talking partner, by setting an audio filter suitable for a language used by a user of the portable terminal.

While the invention has been shown and described with reference to certain embodiments thereof, it will be understood by those skilled in the art that various changes in form and details may be made therein without departing from the spirit and scope of the invention as defined by the appended claims.

## Claims

1. A method for outputting voice data in a portable terminal, the method comprising the steps of:
setting voice frequency bands of one language selected from a plurality of languages;
modulating frequency bands of received voice data to the voice frequency bands of the set language; and
outputting the voice data whose frequency bands are modulated to the voice frequency bands of the set language.

2. A method according to claim 1, further comprising the step of storing audio filter coefficient values for modulating the frequency bands of the received voice data according to the plurality of languages.

3. A method according to claim 1, wherein the setting step comprises the sub-steps of:
displaying a list including names of the plurality of languages, if a language setup request is received; and
setting voice frequency bands of the selected language on the basis of selection information received, the selection information being at least one of names of the plurality of languages in the list.

4. A method according to claim 2, wherein the setting step comprises the sub-steps of:
displaying a list including names of the plurality of languages, if a language setup request is received; and
setting voice frequency bands of the selected language on the basis of selection information received, the selection information being at least one of names of the plurality of languages in the list.

5. A method according to claim 3, wherein the sub-step of setting a voice frequency band comprises the sub-steps of:
reading coefficient values of an audio filter for setting the voice frequency bands of the selected language, of audio filter coefficient values stored in advance, on the basis of the selection information; and
applying the read coefficient values to the audio filter.

6. A method according to claim 4, wherein the sub-step of setting a voice frequency band comprises the sub-steps of
reading coefficient values of an audio filter for setting the voice frequency bands of the selected language, of audio filter coefficient values stored in advance, on the basis of the selection information; and
applying the read coefficient values to the audio filter.

7. A portable terminal comprising:
a memory for storing audio filter coefficient values for modulating frequency bands of voice data according to a plurality of languages;
a control unit for setting voice frequency bands of one language selected from the plurality of languages and for modulating frequency bands of received voice data to the voice frequency bands of the set language; and
an audio processing unit for outputting the voice data whose frequency bands are modulated to the voice frequency bands of the set language.

8. A portable terminal according to claim 7, wherein the control unit reads coefficient values of an audio filter for setting the voice frequency bands of the selected language, from the memory, on the basis of selection information and applies the read coefficient values to the audio filter

9. A portable terminal according to claim 8, wherein the control unit modulates the frequency bands of received voice data through the audio filter to which the read coefficient values are applied.

10. A portable terminal according to claim 8, wherein the audio filter is comprised by the control unit.

11. A portable terminal according to claim 8, wherein the audio filter is comprised by the audio processing unit.
